# EUROPÄISCHE PATENTSCHRIFT

(11) **EP 0 603 843 B1**
(45) Veröffentlichungstag und Bekanntmachung des Hinweises auf die Patenterteilung: **08.05.1996**
(21) Anmeldenummer: 93120646.0
(22) Anmeldetag: 21.12.1993
(51) Int. Cl.: B60K 17/04, B62M 15/00, A01D 34/30

(54) **Antriebsvorrichtung für Fahrzeuge**
Drive device for vehicles
Dispositif d'entraînement pour véhicules

(30) Priorität: 21.12.1992 DE 9217355 U; 11.03.1993 DE 9303581 U
(43) Veröffentlichungstag der Anmeldung: 29.06.1994
(73) Patentinhaber: Köppl, Karl, D-94163 Saldenburg (DE)
(72) Erfinder: Köppl, Karl, D-94163 Saldenburg (DE)
(74) Vertreter: Riederer Freiherr von Paar zu Schönau, Anton

(56) Entgegenhaltungen:
- DE-U- 9 113 087
- FR-A- 428 945
- FR-A- 1 216 611
- US-A- 1 591 256

## Beschreibung

Die Erfindung bezieht sich auf eine Antriebsvorrichtung für ein Arbeitsfahrzeug mit einem Antriebsmotor, einer querliegenden Antriebsachse, einem angetriebenen Arbeitswerkzeug und einer in Längsrichtung des Fahrzeugs verlaufenden, vom Antriebsmotor angetriebenen und der Übertragung des Antriebs auf die Antriebsachse und das Arbeitswerkzeug dienenden Antriebswelle.

Bei motorbetriebenen Arbeitsfahrzeugen, insbesondere fahrenden landwirtschaftlichen Maschinen, umfassen die Antriebsübertragungsvorrichtungen technisch relativ hochwertige Bauteile, insbesondere in Öl laufende Getriebe, die die Vorrichtung teuer und für eine Werkstättenherstellung unzugänglich machen.

Der Erfindung liegt die Aufgabe zugrunde, eine einfach und robust herstellbare Antriebsvorrichtung zu schaffen, die die bekannten Prinzipien verbessert und für motorbetriebene Fahrzeuge günstig verfügbar macht.

Diese Aufgabe wird gemäß der Erfindung dadurch gelöst, daß an wenigstens einem im Abstand zur Antriebsachse angeordneten, von der Antriebswelle über eine kinematische Kette in vor- und zurückverlaufende Schwingungen versetzten Lagerpunkt jeweile eine längsbewegliche, auf Zug und/oder Druck beanspruchte Bewegungsübertragungsstange gelagert ist, die über einen Freilauf auf die Antriebsachse wirkt. Dies kann insbesondere so verwirklicht sein, daß der Lagerpunkt kinematisch mit einer Steuerkurveneinheit verbunden ist, die einen drehbaren Kurvenkörper mit einer Abgriffsfläche aufweist, deren Verlauf mit der Längsrichtung der Bewegungsübertragungsstange eine gemeinsame Komponente aufweist und an der ein Abgreifer angreift, wobei der Kurvenkörper einerseits und der Abgreifer andererseits starr an der Antriebswelle sitzen bzw. kinematisch mit der Bewegungsübertragungsstange verbunden sind; oder dadurch, daß der Lagerpunkt an einem Ende eines L-förmigen Hebels sitzt, der im Bereich seines Scheitels gelagert ist und dessen anderes Ende mit einem parallel zur Lagerachse des Hebels verlaufenden Langloch versehen ist, in das ein durch den Antrieb in eine hin- und hergehende Querbewegung versetzter Mitnehmer eingreift, der exzentrisch achsparallel an einem rotierenden Antriebsbauteil sitzt; oder gemäß einer weiteren Abwandlung dadurch, daß, wenn sie Bestandteil eines solchen Arbeitsfahrzeugs ist, welches ein quer zur Fahrtrichtung angeordnetes, durch den Antriebsmotor in eine hin- und hergehende Querbewegung versetztes Werkzeug trägt, mit dem Werkzeug ein in eine hin- und hergehende Querbewegung versetztes Bauteil bewegungsstarr verbunden ist, wobei der Lagerpunkt an einem Ende eines L-förmigen Hebels sitzt, der im Bereich seines Scheitels gelagert ist und dessen anderes Ende mit dem hin- und hergehenden Bauteil gelenkig verbunden ist.

Eine Antriebsvorrichtung über eine Bewegungsübertragungsstange und einen Freilauf ist an sich aus der DE 25 32 732 A1 bekannt. Dort wird die Antriebsvorrichtung für einen handbetriebenen Rollstuhlantrieb benutzt. Bei dieser Antriebsvorrichtung erfolgt eine Kraftübertragung immer nur in einer Richtung bezüglich der vor- und zurücklaufenden Schwingung, während in der anderen Richtung der Freilauf wirkt. Hierbei geht man von einer vor- und zurücklaufenden Bewegung in Fahrtrichtung durch entsprechende manuell betätigte Hebeloszillation aus. Es besteht aber keine Möglichkeit, eine Antriebs-Rotationsbewegung auszunutzen und auf die Antriebsachse zu übertragen.

Die Antriebsübertragung auf die Fahrzeug-Antriebsachse erfolgt gemäß der Erfindung mit einfachsten Bauteilen in Form einer Schweißkonstruktion vollkommen ohne Zahnräder, ja sogar als vollkommen offene Konstruktion, deren gegeneinander bewegliche Teile eine ölfreie Dauerschmierung aufweisen können. Nach Zukauf des Freilaufs kann die Antriebsübertragungsvorrichtung selbst mit einfachen Mitteln problemlos montiert werden. Bei einer Bewegungsabnahme von der längsverlaufenden Antriebswelle ist es unbenommen, am Wellenende beliebige und auch austauschbare anzutreibende Nutzwerkzeuge zu montieren.

Insbesondere werden die Ausführungen mit zwei Bewegungsübertragungsstangen, die jeweils auf einen Freilauf wirken, bevorzugt, eventuell auch mit noch mehr Bewegungsübertragungsstangen und Freiläufen, von denen jeweils einer antreibt, während der andere bzw. die anderen sich in der Freilaufphase befindet/befinden.

Die Maßnahmen der Ansprüche 6 und 7 betreffen eine einfache Ausführung des Kurvenkörpers als Kurventrommel, die auf der in Längsrichtung des Fahrzeugs verlaufenden Welle sitzt. Hierbei ist es insbesondere in einfacher Weise möglich, mit zwei gegenüberliegenden Abgreifern von einem einzigen Kurvenkörper zwei gegenläufige Bewegungsphasen abzugreifen. Es wäre aber auch möglich, daß wenigstens zwei getrennte Kurvenkörper vorhanden sind, an denen jeweils ein eigener Abgreifer angreift, und die wenigstens zwei Abgreifer jeweils mit einer der Bewegungsübertragungsstangen gekoppelt sind. Die zwei - oder noch mehr - Bewegungsübertragungsstangen und Freiläufe sind dabei zeitlich versetzt angetrieben, so daß für jeden Freilauf ein optimaler Bewegungsverlauf im Sinne einer möglichst gleichmäßigen Gesamtbewegung eingesteuert werden kann.

Nach Anspruch 8 handelt es sich um Kurvenscheiben, die vorzugsweise auf der Arbeitswelle beiderseits der Antriebswelle sitzen, wobei ebenfalls der Bewegungsverlauf für die beiden Freiläufe unabhängig voneinander eingesteuert werden kann. Solche Kurvenscheiben sind dann zweckmäßig, wenn eine querverlaufende Antriebswelle zur Verfügung steht, beispielsweise im Fall einer Schneefräse, einer Bodenfräse oder einer Kehrmaschine.

Der einzelne Kurverkörper kann z. B. einer sein, der eine Nut aufweist, in die der Abgreifer eingreift, oder einer, der einen Nockenrand aufweist, wobei der Abgreifer durch Federkraft an den Nocken gedrückt ist. Es handelt sich im ersteren Fall um Steuerkurven im eigentlichen Sinne, also mit zwangsläufiger Führung der Abgreifer in beiden Bewegungsrichtungen der Bewegungsübertragungsstangen. Aufgrund dieser zwangsläufigen Führung wird diese Ausführung insbesondere bei solchen Anwendungen bevorzugt, bei denen die Bewegungsübertragungsstangen offen liegen und deshalb unter Umständen Hemmungen durch Verschmutzung oder Korrosion ausgesetzt sind. Andernfalls kann auch ein Nocken den Zweck erfüllen, wobei dann der leerlaufende Rücklauf der Bewegungsübertragungsstangen durch die Federkraft zu erfolgen hat. Die Feder muß zwar in der Antriebsphase vom Antrieb zusätzlich überwunden werden, gleichzeitig unterstützt jedoch die Feder der zurücklaufenden Bewegungsübertragungsstange den Antrieb und entfällt eine eventuelle Zugkraft bei der Rückwärtsbewegung im Falle einer gehemmten Bewegungsübertragungsstange.

Bei der Ausführungsform, bei der von einem in hin- und hergehende Schwingungen versetzten Werkzeug diese Bewegung von der Antriebsvorrichtung abgegriffen wird, z. B. von einem Mähwerk mit einem oder mit zwei oszillierenden Messerbalken oder von einem Bodenrechen, weist vorzugsweise die Antriebsvorrichtung zwei miteinander fest verbundene L-förmige Hebel, d. h. einen T-förmigen Hebel auf. Dadurch ergeben sich Lagerpunkte für zwei gegenläufig wirkende Stangen, von denen stets eine zu einer Zeit die Antriebskraft überträgt, so daß ein nahezu stetiger Antrieb vorliegt.

Es ist besonders vorteilhaft, wenn an einem mit dem Lagerpunkt verbundenen Hebel nach Anspruch 9 und/oder an einem mit dem Freilauf verbundenen Hebel nach Anspruch 3 eine Verstelleinrichtung zur Beeinflussung der Geschwindigkeit des Fahrzeugs angeordnet ist, nämlich in Form einer Verstellbarkeit des Angriffspunkts der Stange an wenigstens einem der Hebel entlang dessen Länge. Die damit erzielte Geschwindigkeitsänderung bietet beim Einsatz der erfindungsgemäßen Antriebsvorrichtung an einem landwirtschaftlichen Nutzfahrzeug den Vorteil, daß bei gleichbleibender Arbeitsfrequenz des Werkzeuges, z. B. eines Mähwerks, eine Veränderung der Fahrgeschwindigkeit, d. h. des Vorschubs erzielbar ist.

Bei einer einfachen Ausführungsform ist der Antriebsvorrichtung lediglich ein einziger Freilauf zugeordnet, der die Bewegung des Fahrzeugs in einer Fahrtrichtung ermöglicht. Vorzugsweise sind jedoch an der Antriebsachse des Fahrzeugs nach Anspruch 2 wenigstens zwei entgegengesetzt wirkende Freiläufe angeordnet, über die die von der Stange übertragene Kraft an der Antriebsachse entweder in Form eines Vorwärtsgangs oder eines Rückwärtsgangs oder eines Leerlaufs angreift. Als Freilauf dient z. B. ein Hülsenfreilauf wie z. B. ein Klemmkugelfreilauf, oder ein Ratschenfreilauf, wie sie aus der Technik bekannt sind. Die Leerlaufweite in der Angreif-Drehrichtung sollte möglichst klein sein, da - je nach Anwendung - der Nutzhub der vor- und zurückschwingenden Stange(n) bei fahrbaren Arbeitsmaschinen im allgemeinen nur in der Größenordnung von wenigen cm liegt.

Es ist vorteilhaft, wenn sich die Abgreifer der Antriebsvorrichtung in einem Abstand von dem am Ende der Antriebswelle angebrachten Werkzeug befinden und im Bereich zwischen Abgreifern und Werkzeug die Antriebswelle durch ein Kupplungselement unterbrochen ist. Damit ist es möglich, das Werkzeug in Ruhe zu versetzen, ohne den Motor außer Betrieb zu nehmen.

Die Erfindung eignet sich insbesondere für langsamfahrende Fahrzeuge, etwa in der Größenordnung der Fußgängergeschwindigkeit, bei denen sich die periodische Unstetigkeit des Antriebs nicht als Vibration bemerkbar macht. Genannt seien beispielsweise der Einsatz in der Land- und Forstwirtschaft, im Gartenbau, für Landpflegearbeiten, im kommunalen sowie im häuslichen Gebrauch.

Weitere Vorteile, Einzelheiten und Merkmale der Erfindung ergeben sich aus der nachfolgenden Beschreibung bevorzugter Ausführungsbeispiele unter Bezugnahme auf die Zeichnung. Es zeigen:
- Fig. 1: das Schema einer Antriebsvorrichtung in Draufsicht;
- Fig. 2: das Schema einer abgewandelten Antriebsvorrichtung an einer holmgeführten selbstfahrenden Mähmaschine in Seitenansicht;
- Fig. 3: einen Längsschnitt durch ein Doppelmessermähwerk der Mähmaschine nach Fig. 2 mit Teilen der Antriebsvorrichtung nach Fig. 1;
- Fig.n 4 bis 6: schematische Teil-Draufsichten auf abgewandelte Ausführungsformen;

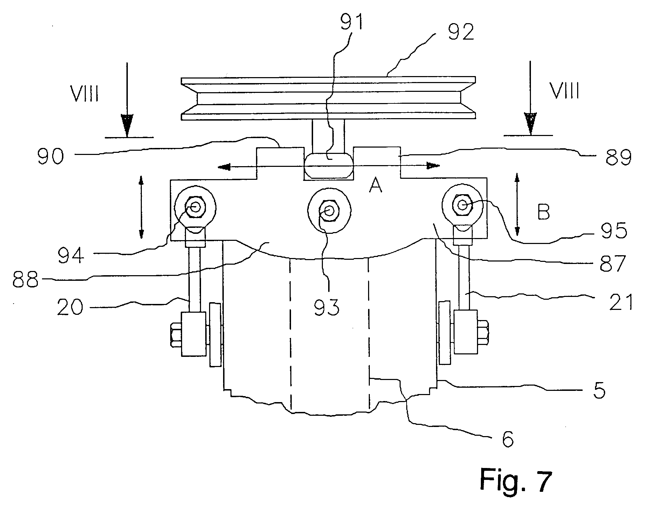

- Fig. 7: eine schematische Teil-Draufsicht auf eine Antriebsvorrichtung gemäß einer alternativen Ausführungsform;
- Fig. 8: eine Schnittansicht der Ausführungsform nach Fig. 7 in einer Ebene VIII - VIII;
- Fig. 9: eine Seitenansicht der Antriebsvorrichtung nach Fig. 7;

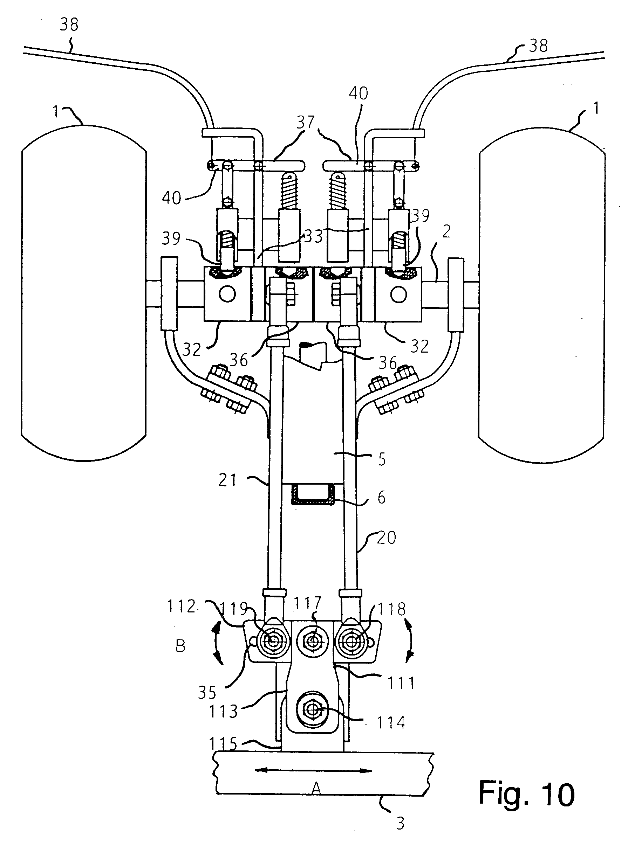

- Fig. 10: das Schema einer abgewandelten Antriebsvorrichtung in Draufsicht;

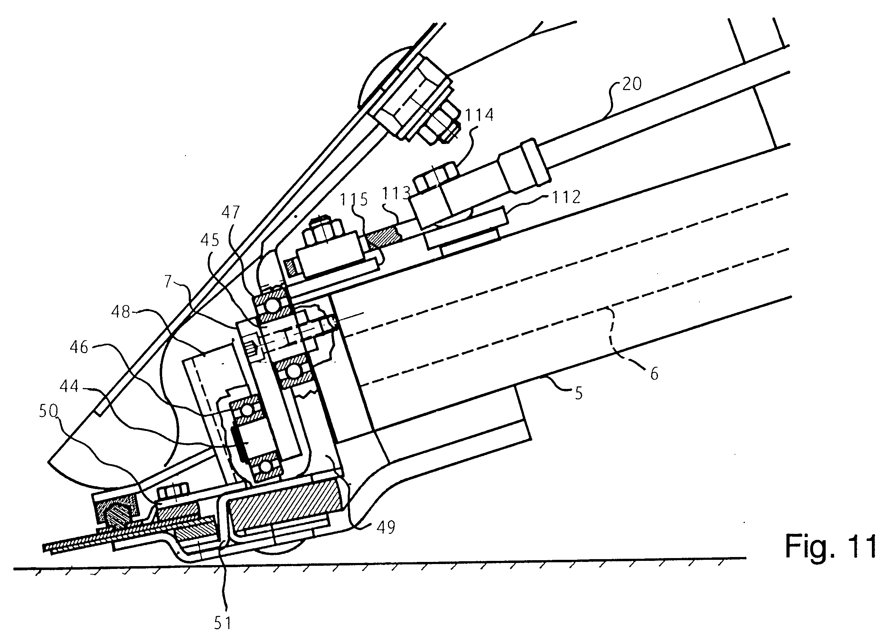

- Fig. 11: einen Längsschnitt durch ein Doppelmessermähwerk der Mähmaschine nach Fig. 10 mit Teilen der Antriebsvorrichtung;
- Fig. 12: einen T-förmigen Hebel mit einer Geschwindigkeitswahlmöglichkeit;
- Fig. 13: eine im Vergleich zu Fig. 1 abgewandelte Einrastvorrichtung mit zwei Freiläufen;
- Fig. 14: eine Schnittansicht der Einrastvorrichtung entlang einer Schnittebene XIV-XIV in Fig. 13.

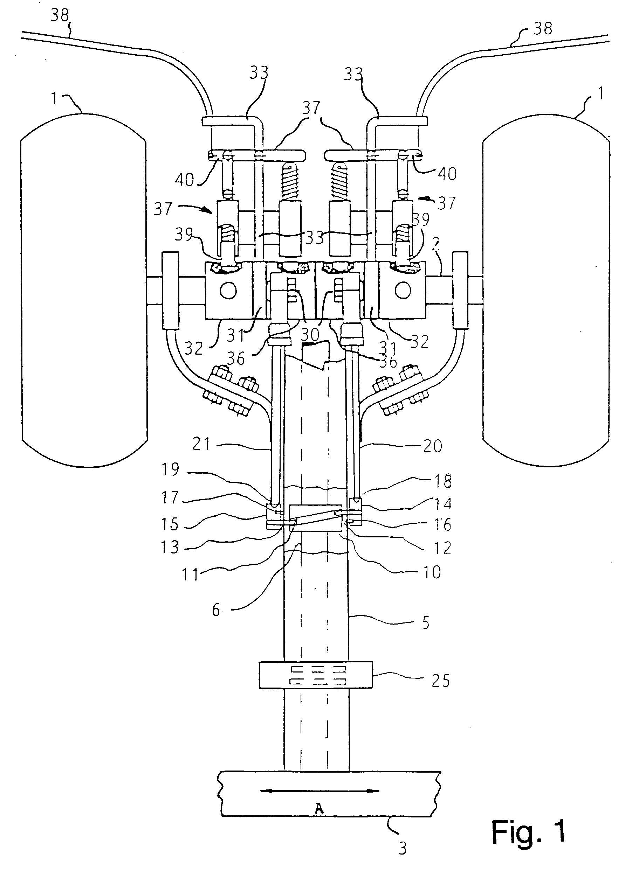

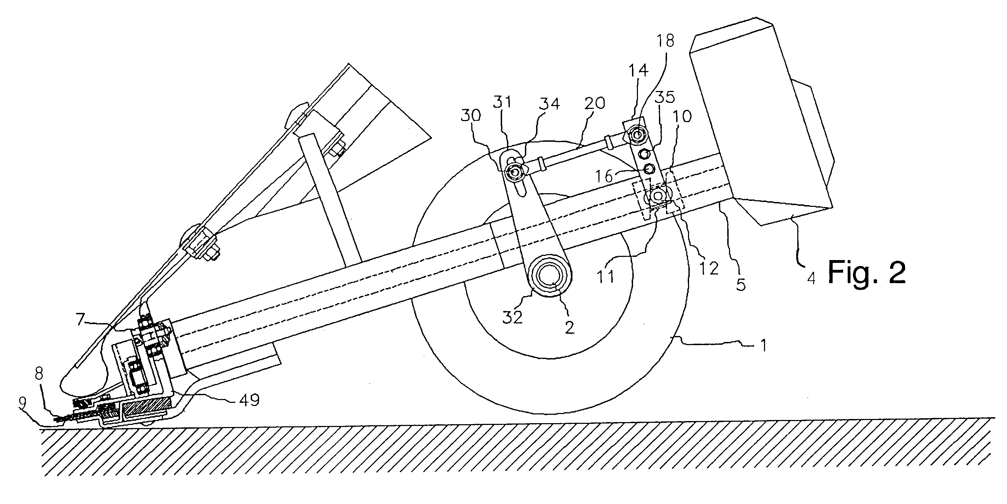

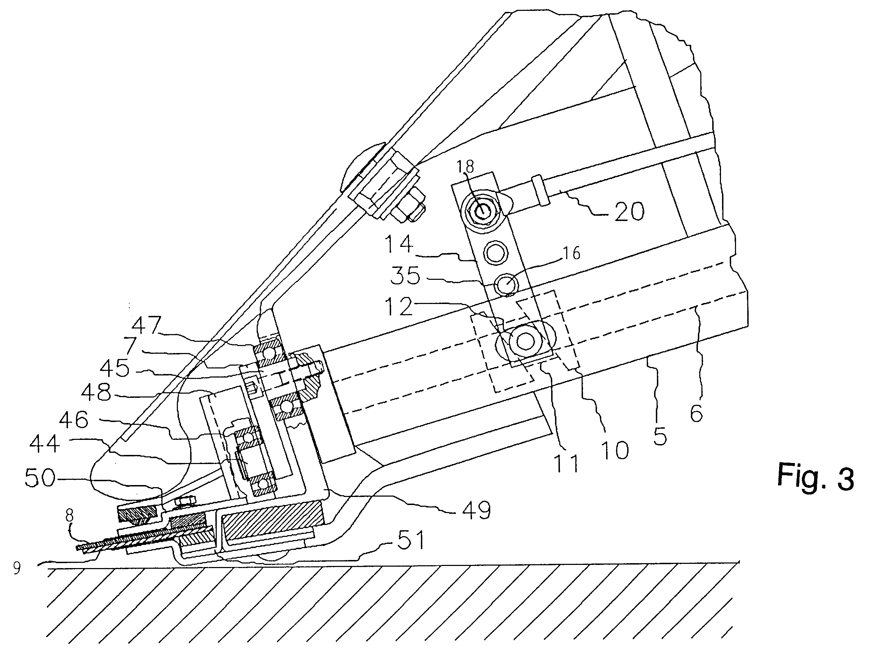

Figuren 1 bis 3 zeigen den schematische Aufbaue einer erfindungsgemäßen Antriebsvorrichtung in Draufsicht, und zwar nach Fig. 2 und 3 an einer nur teilweise dargestellten einachsigen holmgeführten Mähmaschine mit angetriebenen Rädern 1, die auf einer Antriebsachse 2 sitzen. Die Mähmaschine weist am Mähwerk ein hin- und hergehendes Werkzeug 3 auf, das seinerseits mit zwei beweglichen Mähmessern gekoppelt ist und von einer Motoreinheit 4, die außer dem Antriebsmotor üblicherweise noch ein Kupplungselement umfaßt (in Fig. 1 weggelassen), über eine in einem rahmenfesten Antriebswellengehäuse 5 laufende Antriebswelle 6 über eine Doppelkurbel 7 angetrieben wird. Für eine demgegenüber vereinfachte Ausführungsform genügt auch die Verwendung einer Einfachkurbel, wenn z. B. nur ein Mähmesser in Schwingungen versetzt werden soll. Das obere Messer ist mit 8 und das untere mit 9 bezeichnet.

Von der Antriebswelle 6 wird auch der Antrieb für die Antriebsachse 2 abgenommen. Zu diesem Zweck befindet sich auf der Welle 6 eine Kurventrommel 10 mit einer entlang einer Schrägebene um die Trommel umlaufenden Steuernut 11, in der, in Fahrtrichtung gesehen, ein linker Bewegungs-Abgreifer 12 und ein rechter Bewegungs-Abgreifer 13 als Bewegungsabnehmer jeweils über ein Lager geführt sind. Am linken Abgreifer 12 greift ein zweiarmiger linker Hebel 14 und am rechten Abgreifer 13 ein zweiarmiger rechter Hebel 15 an. Der Hebel 14 ist etwa mittig bei 16 gehäusefest gelagert und der Hebel 15 ist entsprechend bei 17 gelagert. Am oberen Ende der Hebel 14 und 15 greift über eine Schwenklagerung 18 bzw. 19 jeweils eine Zug- und/oder Druckstange 20 bzw. 21 an, die als Bewegungsübertragungsstangen dienen. Die Stangen 20, 21 bewegen sich infolge der oszillierenden Vor- und Zurückbewegung der Abgreifer 12 und 13 in der Nut 11 jeweils entgegengesetzt zueinander in Längsrichtung des Fahrzeugs vor und zurück.

Die die Bewegungs-Abgreifer umfassende Einheit kann in verschiedenen Bereichen entlang der Welle 6 angeordnet sein. In Fig. 1 und 3 befindet sie sich kurz vor der Antriebsachse 2 in Fahrtrichtung. Genausogut kann sie, wie in Fig. 2 gezeigt, in dem Bereich zwischen Antriebsachse 2 und Motoreinheit 4 angeordnet sein.

In der Ausführungsform nach Fig. 1 werden die Bewegungs-Abgreifer nicht zu nah an dem Werkzeug 3 angeordnet. Im weiteren Verlauf der Welle 6 ist ein Kupplungselement 25 eingeschaltet, welches schematisch dargestellt ist und wodurch das Werkzeug 3 ruhiggestellt wird, ohne die Motoreinheit 4 außer Betrieb zu nehmen, wodurch eine Bewegung des Fahrzeugs ohne die Betätigung des Werkzeugs möglich ist.

Die Zug- und Druckstangen 20, 21 enden mit ihrem der Kurventrommel 10 abgewandten Ende jeweils in einem Gelenkkopf 30 (Fig. 2). Der Gelenkkopf 30 verbindet die jeweilige Zug- und Druckstange 20, 21 verdrehbar mit einem Antriebshebel 31, der mit einem Lagerauge auf der Antriebsachse 2 gelagert ist. Der Antriebshebel 31 wirkt an seinem gelagerten Ende auf einen Freilauf 32, der die hin- und herschwenkende Bewegung des Antriebshebels 31 phasenweise auf die Fahr-Antriebsachse 2 überträgt und diese in eine Drehbewegung versetzt. Der Freilauf 32 ist erforderlich, damit die Hin- und Herdrehung des Antriebshebels 31 eine Drehung der Antriebsachse 2 nur in einer Richtung erzeugt, wodurch die Fortbewegung des Fahrzeugs möglich wird. Als Freilauf 32 wird ein aus der Technik bekanntes Bauteil benutzt. Z. B. kommen Hülsenfreiläufe oder Ratschenelemente zum Einsatz. Der Hebel 31 führt zweckmäßigerweise als Arbeitshub eine Verschwenkung innerhalb eines Bereichs bis 15° aus, so daß der Gelenkkopf 30 sich nahezu linear hin- und herbewegt und der Hebel 31 seine günstige Winkellage im wesentlichen durch den ganzen Hub beibehält. Am Lagerauge des Hebels 31 sitzt noch ein Ansatz 33, der die Antriebsverbindung zum Freilauf herstellt, wie später noch genauer beschrieben wird. Das Lagerauge ist mittels eines Kugellagers auf der Achse 2 gelagert.

Der die Verbindung zwischen der Stange 20 bzw. 21 und dem Antriebshebel 31 herstellende Gelenkkopf 30 ist in einem Langloch 34 im Antriebshebel 31 befestigt. Damit ist der Abstand zwischen der Achse 2 und dem Gelenkkopf 30 veränderbar, wodurch sich bei einer Änderung der radialen Justierung der Zug- und Druckstangen ein unterschiedlicher Ausschlag des Antriebshebels 31 und damit bei gleichbleibender Frequenz der Hin- und Herbewegung der Zug- und Druckstangen eine unterschiedliche Fortbewegungsgeschwindigkeit des Fahrzeugs ergibt. Das Verändern des Abstandes zwischen dem Gelenkkopf 30 und der Antriebsachse 2 kann sowohl manuell bei stillstehendem Fahrzeug, als auch über eine Verstellvorrichtung, z. B. eine von Hand oder elektromotorisch oder hydraulisch angetriebene Drehspindel, erfolgen. Die Geschwindigkeitsanpassung ist dabei stufenlos, bei der Verwendung geeigneter Verstellmittel auch während der Fahrt, möglich. Zusätzlich oder alternativ können die Stangen 20, 21 in den Hebeln 14 und 15 wahlweise in jeweils einen von mehreren den Abstand zur Lagerung 16 verändernden Löchern 35 gelagert werden, wie hier beim beschriebenen Beispiel, die Geschwindigkeitswahl ist dann stufig. Wie bereits bei der oben beschriebenen Geschwindigkeitseinstellmöglichkeit an den Hebeln 31 könnte auch diese Einstellung manuell oder mit geeigneten Verstellelementen erfolgen. Neben der Geschwindigkeitssteuerung, sowohl bei der Vorwärtsbewegung als auch bei der Rückwärtsbewegung des Fahrzeugs, bieten diese zwei beschriebenen Einstellmöglichkeiten auch eine Variante zum Erzielen der Kurvenfahrt des Fahrzeugs. Dazu muß das Fahrzeug mit einer zweiteiligen Antriebsachse 2 ausgestattet sein, und die Geschwindigkeitseinstellmittel wirken getrennt auf die beiden Räder 1.

Bei einer anderen (nicht dargestellten) Ausführungsform können die Löcher 35 auch in Form eines einzigen Langlochs gestaltet sein. Damit kann der Abstand zwischen der Lagerung 16 bzw. 17 und den Lagerpunkten 18 bzw. 19 stufenlos geändert werden.

Die in Fig. 1 gezeigte Ausführungsform umfaßt neben den beiden Freiläufen 32, wovon jeweils einer dem Lagerauge des Hebels 31 der Zug- und Druckstange 20 bzw. dem Lagerauge des Hebels 31 der Zug- und Druckstange 21 zugeordnet ist, zwei weitere Freiläufe 36 mit entgegengesetztem Freilaufsinn. Konstruktiv sind die Freiläufe 36 den Freiläufen 32 identisch, jedoch sind sie andersherum auf die Achse 2 aufgezogen. Um eine billigere Herstellung zu ermöglichen, ist es auch möglich, diesen weiteren Freilauf 36 mit dem entgegengesetzten Freilaufsinn nur einer der Zug-und Druckstangen 20, 21 zuzuordnen. Die andere Bewegungsstange würde in diesem Fall in dieser entgegengesetzten Bewegungsrichtung des Fahrzeugs leerlaufen. Der einzelne Freilauf besteht aus einem inneren Hülsenfreilauf und einem fest und dauerhaft auf ihn aufgezogenen Außenring. Diese Einheit ist ihrerseits drehfest auf die Achse 2 aufgezogen.

Bei der dargestellten Anordnung bewirken die Freiläufe 32 eine Mitdrehung der Antriebsachse 2 so, daß die Stangen auf Zug beansprucht werden und das Fahrzeug vorwärts bewegt wird, hingegen sind die Freiläufe 36 ihren jeweiligen Zug- und Druckstangen 20, 21 so zugeordnet, daß diese auf Druck beansprucht werden und dabei eine entgegengesetzte Drehung der Antriebsachse 2 und damit die Rückwärtsbewegung des Fahrzeugs bewirken. Mit Hilfe jeweiliger Einrastvorrichtungen 37, die an den Ansätzen 33 montiert sind, werden den beiden Ansätzen 33 der Lageraugen der Hebel 31 entweder die die Vorwärtsdrehung bewirkenden Freiläufe 32 oder die die Rückwärtsdrehung bewirkenden Freiläufe 36 angekoppelt. Die Antriebsverbindung der Lageraugen der Hebel 30 zu jeweils einem der Freiläufe 32 oder 36 erfolgt über die Ansätze 33 und über Bolzen 39. Die Ansätze 33 und die Einrastvorrichtungen 37 oszillieren also mit den Hebeln 30 ständig mit. Zwischen ihren beiden Betriebsstellungen läßt die Einrastvorrichtung 37 eine Leerlaufstellung zu, in der die Bewegung der Zug- und Druckstangen 20, 21 weder auf die Freiläufe 32 noch auf die Freiläufe 36 übertragen wird. Die Antriebsachse 2 befindet sich damit in Ruhe. Die Einrastungsvorrichtungen 37 werden jeweils über einen Bowdenzug 38 betätigt und wirken mittels eines der Bolzen 39. Bei der Konstruktion nach Fig. 1 handelt es sich um Freiläufe, die durch Einschieben des Bolzens 39 in ein Umfangsloch des Freilauf-Außenrings einbezogen werden, wodurch der Außenring mit dem jeweiligen Ansatz 33 gekoppelt wird, und durch Zurückziehen des Bolzens 39 desaktiviert werden, indem ihr Außenring abgekoppelt wird und sich in beiden Drehrichtungen frei mitdrehen kann. Werden die betreffenden Bolzen 39 durch Betätigung des Bowdenzugs 38 aus den Löchern beider Freiläufe 32 und 36 hinausgezogen, so kommt es zum Stillstand des Fahrzeugs. Bei weiterem Ziehen des Bowdenzugs 38 werden die beiden gegenläufigen Bolzen 39, die parallel an der jeweiligen Einrastvorrichtung 37 angeordnet sind, in die anderen Freiläufe eingeschoben. Dadurch werden diese aktiviert, und das Fahrzeug bewegt sich in der entgegengesetzten Fahrtrichtung.

Die Einrastvorrichtung 37 umfaßt einen Schwinghebel 40, der jeweils zwei der Bolzen 39 über den Bowdenzug 38 betätigt. Die beiden Bowdenzüge 38 hängen gemeinsam an einem Handbetätigungshebel, wodurch die Einhandbedienung der Freilaufgangschaltung ermöglicht wird. Dieser Einhandhebel hat drei rastende Stellungen, um zwischen dem Vorwärtsgang, dem Rückwärtsgang und dem Leerlauf auszuwählen. Mit einer Hand kann also während der Bewegung des Fahrzeugs umgeschaltet werden, was z. B. beim Mähen an Hängen oder Kanten sehr hilfreich ist. Die Loslaßstellung des Handhebels soll einer ausgekoppelten Stellung entsprechen.

Die Erzeugung der hin- und hergehenden Bewegung des Werkzeugteils 3 erfolgt in an sich bekannter Weise (DE-GM 91 13 087.5). Die Antriebsenergie wird vom Antriebsmotor 4 über die Antriebswelle 6 zu den Messern 8 und 9 geleitet. Hierzu ist die Antriebswelle 6 starr mit der Kurbel 7 verbunden, die zwei Kröpfungen mit Kurbelzapfen 44 und 45 aufweist, von denen die Kröpfung mit dem Kurbelzapfen 44 dem oberen Messer 8 und die Kröpfung mit dem Kurbelzapfen 45 dem unteren Messer 9 zugeordnet ist (Fig. 3). Der Kurbelzapfen 44 ist mit einem Kugellager 46 und der Kurbelzapfen 45 mit einem Kugellager 47 versehen, die als reibungsarm gelagerte Rollen der Kurbelzapfen dienen. Der Kurbelzapfen 44 läuft mit seinem Kugellager 46 in einer Kulisse 48 und der Kurbelzapfen 45 läuft mit seinem Kugellager 47 in einer Kulisse 49. Die Kulissen weisen jeweils ein rechteckiges Langloch mit im wesentlichen vertikal verlaufender Längserstreckung auf, dessen parallel zur Bewegungsrichtung der Messer verlaufende Quererstreckung geringfügig größer ist als der Durchmesser der Kugellager 46, 47 und deren vertikale Längserstreckung geringfügig größer ist als der Durchmesser der kreisförmigen Bewegungsbahn der Kurbelzapfen 44 bzw. 45 zuzüglich des Durchmessers des jeweiligen Kugellagers. Die Kulisse 48 ist integral mit einer Antriebstraverse 50 und die Kulisse 49 ist integral mit einer Antriebstraverse 51 verbunden. Eine Drehung der Antriebswelle 6 führt also zu entgegengesetzten Bewegungen der Messer 8 und 9.

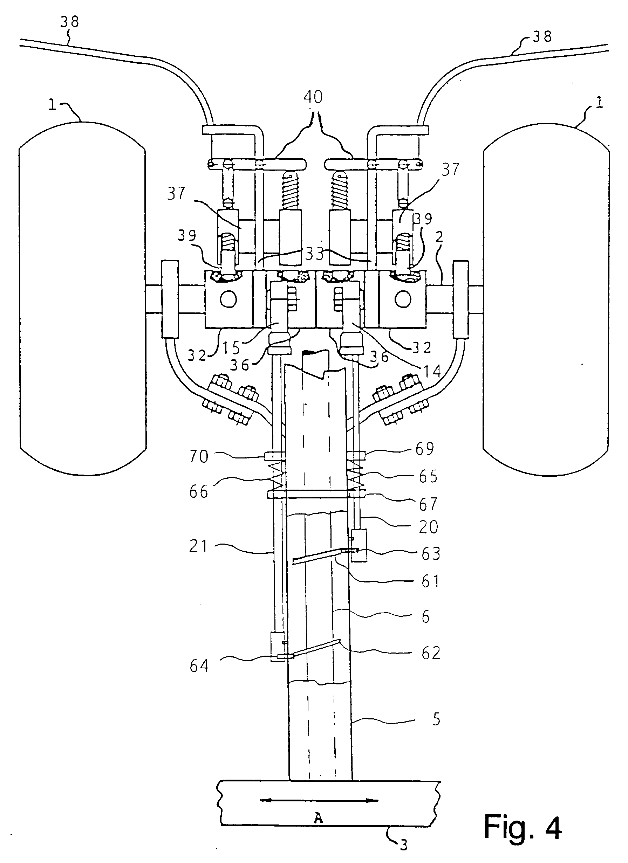

Fig. 4 zeigt schematisch eine in der Hinsicht abgewandelte Ausführung, daß anstelle der eine Nut aufweisenden Kurventrommel nach Fig.n 1, 2 und 3 auf der Antriebswelle 6 zwei Nocken 61, 62 sitzen, die jeweils nur mit einer Stirnfläche einen mit einer gelagerten Rolle darauf laufenden Abgreifer 63 bzw. 64 verschieben. Während die vom jeweiligen Nocken zwangsläufig auf die Stangen 20 bzw. 21 übertragenen Bewegungen die Antriebsbewegungen sind, dienen der Stangenrückstellung in der Freilaufphase Schraubenfedern 65 bzw. 66, die sich an einer am Antriebswellengehäuse 5 sitzenden querverlaufenden Traverse 67 einerseits und an einem an der betreffenden Stange befestigten Teller 69 bzw. 70 andererseits abstützen.

Die beiden voneinander unabhängigen auf der Welle 6 sitzenden Nocken 61 und 62 können ein jeweiliges Profil aufweisen, das einen Zug an der betreffenden Stange 20 bzw. 21 in Abhängigkeit vom augenblicklichen Drehwinkel des Hebels 14 bzw. 15 bewirkt. Dies kann insbesondere dann von Bedeutung sein, wenn diese Hebel bei jedem Hub der Stange einen relativ großen Winkel durchmessen, so daß das am Hebel wirkende Drehmoment sich nicht mehr linear auf die Zugkomponente der Stange überträgt, und/oder wenn der Hebelwinkel am Freilauf relativ groß ist, so daß die Zugkraft an der Stange sich nicht mehr linear auf das Antriebsmoment der Räder 1 überträgt.

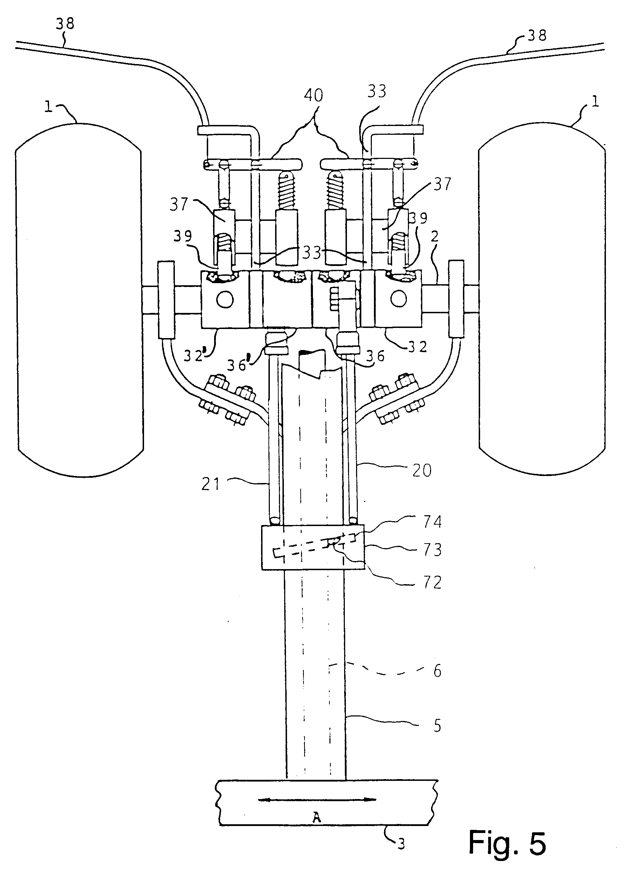

Fig. 5 zeigt eine weitere Abwandlung, bei der auf der Antriebswelle 6 ein einzelner Daumen 72 vorsteht, der mit einer Kurventrommel 73 mit Innennut 74 zusammenwirkt. Die Kurventrommel 73 ist undrehbar und wird deshalb durch den Umlauf des Daumens 72 vor- und zurückbewegt. An der Kurventrommel 73 greifen wiederum über Hebel die Stangen 20 und 21 an, die sich bei dieser Ausführungsform gleichphasig vor- und zurückbewegen. Die Stange 20 wirkt hierbei als Druckstange und wirkt auf den Freilauf 32 in gleicher Weise wie bei den bisher beschriebenen Ausführungsformen, die Stange 21 wirkt jedoch in ihrer Arbeitsphase stets als Zugstange und greift an einem Freilauf 32' auf der dem Angriffspunkt der Stange 20 hinsichtlich der Antriebsachse 2 gegenüberliegenden Seite so an, daß sie in der Schubphase die Vorwärtsdrehung bewirkt. Für die entgegengesetzte Fahrtrichtung wirkt die Stange 20 wiederum mit dem Freilauf 36 zusammen, hingegen greift die Stange 21 an einem Freilauf 36' an, der in entsprechender Weise zum Freilauf 32' auf die Antriebsachse 2 wirkt.

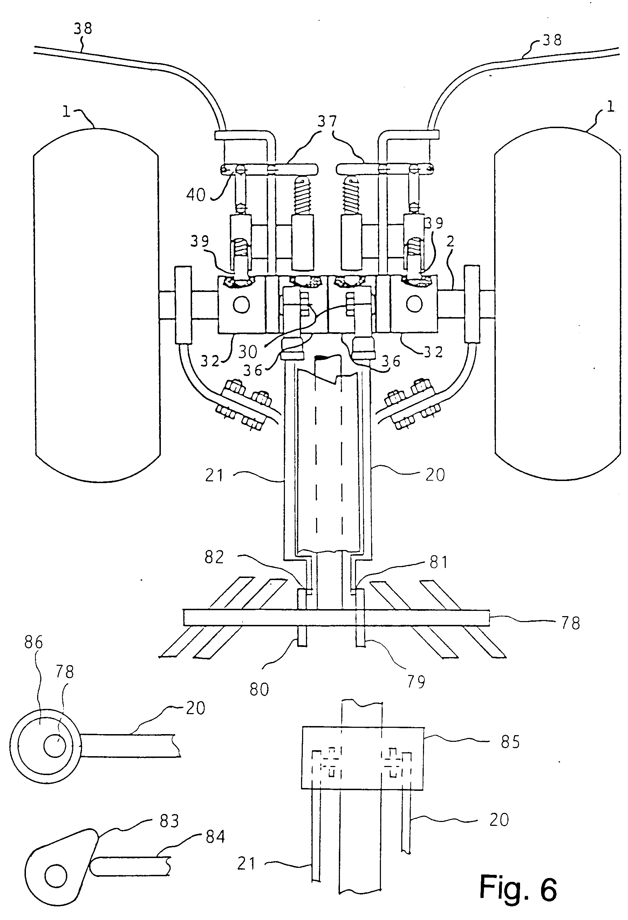

Eine weitere Abwandlung ist in Fig. 6 dargestellt, nämlich bei einer Arbeitsmaschine mit einer querverlaufenden Arbeitswelle 78. Die Arbeitsmaschine ist schematisch als Schneefräse dargestellt. Die Kurvenkörper sind hierbei Kurvenscheiben 79 und 80 mit in den Seitenflächen eingefrästen Nuten, in die Abgreifer 81 bzw. 82 eingreifen. Alternativ können die Kurvenkörper auch Nockenräder 83 sein, an deren Nocken-Umfangsfläche die Stangen 20 und 21 über Abnehmerrollen angreifen, wobei ähnlich der Ausführung nach Fig. 4 Maßnahmen zur Zurückstellung der Stangen vorgesehen sein müssen, oder die Bewegungsstangen greifen direkt an dem Nockenrad 83, in Form eines Abgreifstößels 84 an. Dies eröffnet die Möglichkeit, daß der gesamte Abgriffmechanismus in einem geschlossenen Gehäuse 85, welches mit Öl gefüllt sein kann, gelagert ist und nur die Bewegungsstangen 20, 21 durch mit Dichtungen versehene Öffnungen herausgeführt sind.

Bei einer ebenfalls in Fig. 6 gezeigten Alternative ist auf der quer zur Fahrtrichtung liegenden Arbeitswelle 78 eine Exzenterscheibe 86 angebracht, die ihrerseits in einem Kugellager eingepaßt ist, mit dessen Außenring die Bewegungsstange 20 fest verbunden ist. In Fig. 6 sind diese verschiedenen Kurvenkörper-Varianten getrennt veranschaulicht.

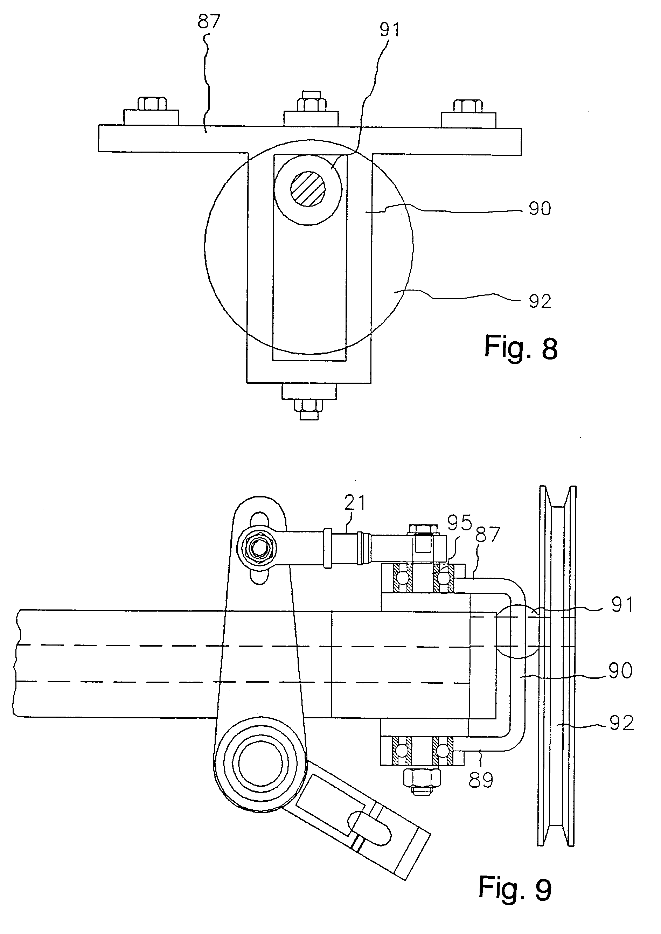

Nach den Fig.n 7 bis 9 erfolgt der Antrieb der Bewegungsübertragungsstangen 20 und 21 durch einen T-förmigen Schwinghebel 87, der durch einen Exzenter zum Oszillieren gebracht wird. Der T-förmige Hebel 87 weist in der Draufsicht einen Querschenkel 88 und einen Längsschenkel 89 auf. Der Hebel 87 insgesamt ist, wie in Fig. 9 erkennbar ist, bügelartig gestaltet und weist an seiner Oberseite und an seiner Unterseite eher plattenförmige Teile auf, die an der Basis des U über die beiden Säulen einer im Längsschenkel 89 gebildeten Rechteckkulisse 90 miteinander verbunden sind.In den Längsschenkel 89 greift an dem dem Kreuzpunkt entgegengesetzten Ende über die Rechteckkulisse 90 eine Lagerkugel 91 ein, die ihrerseits fest auf einer drehbaren Riemenscheibe 92 sitzt, und die beiden Schenkel 88, 89 sind im Kreuzpunkt des T-förmigen Hebels 87 um einen Drehpunkt 93 drehbar mit dem Wellengehäuse 5 verbunden. In nicht dargestellten Ausführungsformen kann an die Stelle der Riemenscheibe 92 auch die Hauptwelle, ein Zahnrad oder ein anderes mit dem Antriebsmotor verbundenes Element treten.

Die Lagerkugel 91 läuft in der dargestellten Ausführungsform während des Betriebs um und hat damit eine in Richtung eines Pfeils A, d. h. quer zur Fahrtrichtung des Fahrzeugs, oszillierende Bewegungskomponente. Die gleiche Bewegung führt damit die Kulisse 90 aus, wodurch der Längsschenkel 89 seinen Winkel zur Längsachse des Fahrzeugs stetig ändert. Das ruft an dem Querschenkel 88 eine Verdrehung in Richtung von Pfeilen B hervor. Der Querschenkel 88 oszilliert zwischen zwei Verdrehungs-Maximalwerten. Am Querschenkel 88 ist jeweils rechts und links des Längsschenkels 89 über einen Lagerpunkt 94 bzw. 95 eine der Zug- und/oder Druckstangen 20 bzw. 21 angelenkt. Die Lagerung der Lagerpunkte 94 und 95 sitzt an Bolzen, die jeweils mit der oberen Platte des Hebels 87 verschraubt sind. Die Drehung der Riemenscheibe 92 bewirkt also über die außermittige Lagerkugel 91, die Rechteckkulisse 90 und den T-förmigen Hebel 87 die Antriebsbewegungen der Stangen 20 und 21.

Die Fig.n 10 und 11 zeigen den schematischen Aufbau einer abgewandelten Antriebsvorrichtung in der Draufsicht bzw. Seitenansicht, und zwar an einer nur teilweise dargestellten einachsigen holmgeführten Mähmaschine entsprechend Fig.n 1 und 2.
Alternativ könnten die Prinzipien dieser Ausführungsform auch bei einem Bodenrechen oder einem sonstigen Arbeitsfahrzeug mit hin- und hergehendem Werkzeug eingesetzt werden. Zur Abnahme der Antriebsbewegung wird hier das hin- und hergehende Werkzeug ausgenützt. Die Mähmaschine weist am Mähwerk das hin-und hergehende Werkzeug 3 auf, das mit Mähmessern gekoppelt ist und vom Antriebsmotor 4 über die Antriebswelle 6 und die Doppelkurbel 7 z. B. in der aus DE-GM 91 13 087.5 bekannten Art angetrieben wird. Vom hin- und hergehenden Werkzeug 3 wird der Antrieb für die Antriebsachse 2 abgenommen.

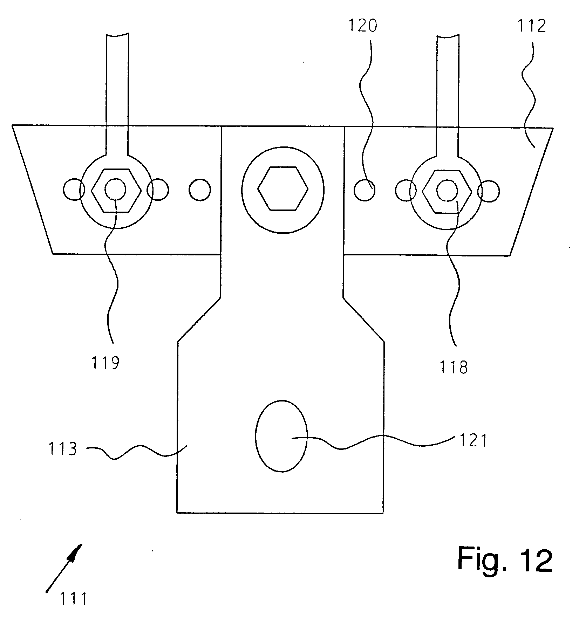

In dem gezeigten Ausführungsbeispiel wird hierfür ein T-förmiger Hebel 111 benutzt (Fig. 12). In anderen Ausführungsformen ist es denkbar, daß der T-förmige Hebel 111 nur zur Hälfte ausgebildet ist und somit eine L-Form hat. Der T-förmige Hebel 111 besteht aus einem Querschenkel 112 und einem Längsschenkel 113. Der Längsschenkel 113 ist an dem dem Kreuzpunkt entgegengesetzen Ende über einen Drehpunkt 114 mit einer Anschlußlasche 115, die ihrerseits fest mit dem hin- und hergehenden Werkzeug 3 integral ist, verbunden, und die beiden Schenkel 112, 113 sind im Kreuzpunkt des T-förmigen Hebels 111 um einen Drehpunkt 117 drehbar mit dem Wellengehäuse 5 verbunden.

Das Werkzeug 3 bewegt sich während des Betriebs oszillierend in Richtung eines Pfeils A, d. h. quer zur Fahrtrichtung des Fahrzeugs. Die gleiche Bewegung führt damit die Anschlußlasche 115 aus, wodurch der Längsschenkel 113 seinen Winkel zur Längsachse des Fahrzeugs stetig ändert. Das ruft an dem Querschenkel 112 eine Verdrehung in Richtung von Pfeilen B hervor. Der Querschenkel 112 oszilliert zwischen zwei Verdrehungs-Maximalwerten.

Am Querschenkel 112 ist jeweils rechts und links des Längsschenkels 113 über das entsprechende Drehlager 118 bzw. 119 die Zug- und/oder Druckstange 20 bzw. 21 angebracht. Die Stangen 20, 21 bewegen sich infolge der oszillierenden Verschwenkung des T-förmigen Hebels 111 um den Drehpunkt 117 jeweils entgegengesetzt zueinander in Längsrichtung des Fahrzeugs vor und zurück.

Zur Geschwindigkeitseinstellung können die Stangen 20, 21 im T-Hebel 111 wahlweise in jeweils einen von mehreren den Abstand zum Drehpunkt 117 verändernden Löchern 120 gelagert werden, hier ist beim beschriebenen Beispiel die Geschwindigkeitswahl stufig. Für die Lagerung 114 dient im Längsschenkel 113 des Hebels 111 ein Langloch 121, dessen nur geringfügige Abweichung von der Kreisform dazu dient, die Abweichung der linearen Bewegung der Anschlußlasche 115 von der bogenförmigen Bewegung des Längsschenkels 113 auszugleichen.

Die Fig.n 13 und 14 zeigen eine gegenüber Fig. 1 abweichende Konstruktion der Einrastvorrichtung 37 zum Auswählen des Vorwärts-bzw. Rückwärtsganges oder des Leerlaufzustands. In den Antriebshebel 31 ist ein Bolzen 125 eingesteckt, der parallel zur Antriebsachse 2 mit Hilfe des Bowdenzugs 38 verschoben werden kann. Dabei kann der Bolzen 125 grundsätzlich drei Positionen einnehmen. Um das Fahrzeug in Vorwärtsbewegung zu versetzen, greift der Bolzen 125 in eine von mehreren Aussparungen 126 des Freilaufs 32 ein. Für eine Rückwärtsbewegung des Fahrzeugs wird der Bolzen 125 aus der Aussparung 126 des Freilaufs 32 herausgezogen und in eine gleichartige Aussparung 127 des Freilaufs 36 eingeschoben. Befindet sich der Bolzen 125 mit keinem Freilauf im Eingriff, ist das Fahrzeug in Ruhe, d. h. im Leerlauf. Das Werkzeug 3 kann unterdessen weiter angetrieben werden.

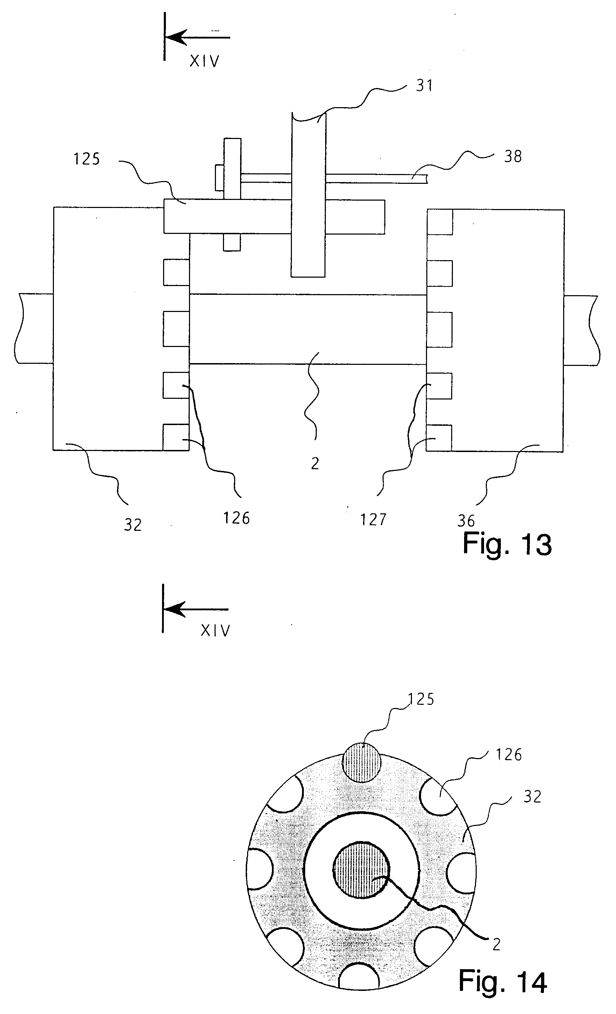

Zur näheren Verdeutlichung des Aufbaus eines Freilaufs und der darin enthaltenen Aussparungen ist in Fig. 14 eine Schnittansicht entlang einer Schnittebene XIV-XIV in Fig. 13 dargestellt.

Als Freilauf könnte ein Ratschenfreilauf benutzt werden. Dabei kommen entweder, wie oben beschrieben, mehrere Ratschenfreiläufe zum Einsatz, wobei zwischen Ratschenfreiläufen, die die Vorwärtsbewegung des Fahrzeugs bewirken, und solchen, die die Rückwärtsbewegung des Fahrzeugs bewirken, ausgewählt werden kann. In der Technik sind auch umschaltbare Ratschenfreiläufe bekannt. Das führt zu einer weiteren Einsparung an Bauteilen und die Auswahl zwischen Vorwärts- und Rückwärtsgang kann ebenfalls einfach erfolgen.

Bei den bisher beschriebenen Varianten, die Freiläufe benutzen, erfolgt bei einer Bergabfahrt des Fahrzeugs keine Bremsung durch den Motor, da sich die Räder aufgrund der Freilaufwirkung in Fahrtrichtung schneller drehen können, als es durch den Antrieb hervorgerufen werden würde. Es ist zweckmäßig, wenn eine entsprechende Fahrzeugbremse angebracht ist. Dabei kommen die verschiedensten Formen von Bremsvorrichtungen, wie z. B. Scheiben- oder Trommelbremsen, Klotzbremsen oder Bandbremsen in Frage.

## Patentansprüche

1. Antriebsvorrichtung für ein Arbeitsfahrzeug mit einem Antriebsmotor (4), einer querliegenden Antriebsachse (2), einem angetriebenen Arbeitswerkzeug (3) und einer in Längsrichtung des Fahrzeugs verlaufenden, vom Antriebsmotor angetriebenen und der Übertragung des Antriebs auf die Antriebsachse und das Arbeitswerkzeug dienenden Antriebswelle (6), dadurch gekennzeichnet, daß an wenigstens einem im Abstand zur Antriebsachse (2) angeordneten, von der Antriebswelle (6, 78) über eine kinematische Kette in vor- und zurückverlaufende Schwingungen versetzten Lagerpunkt (18, 19) jeweils eine längsbewegliche, auf Zug und/oder Druck beanspruchte Bewegungsübertragungsstange (20, 21) gelagert ist, die über einen Freilauf (32, 36) auf die Antriebsachse wirkt.

2. Antriebsvorrichtung nach Anspruch 1, dadurch gekennzeichnet, daß wenigstens zwei entgegengesetzt wirkende Freiläufe (32, 36) an der Antriebsachse (2) angeordnet sind, von denen einer oder keiner durch eine Einrastvorrichtung (37) zur Übertragung der von der Bewegungsübertragungsstange (20, 21) übertragenen Bewegung auf die Antriebsachse (2) aktivierbar ist.

3. Antriebsvorrichtung nach Anspruch 1 oder 2, dadurch gekennzeichnet, daß die Bewegungsübertragungsstange (n) (20, 21) am jeweiligen Freilauf (32, 36) über einen jeweiligen, um die Antriebsachse (2) schwenkbar gelagerten Hebel (31) angreift/angreifen.

4. Antriebsvorrichtung nach einem der Ansprüche 1 bis 3, dadurch gekennzeichnet, daß die das Werkzeug (3) antreibende Antriebswelle (6) durch ein Kupplungselement (25) unterbrochen ist.

5. Antriebsvorrichtung nach einem der Anprüche 1 bis 4, dadurch gekennzeichnet, daß der Lagerpunkt (18, 19) kinematisch mit einer Steuerkurveneinheit (10, 12, 13; 61-64; 79-82) verbunden ist, die einen drehbaren Kurvenkörper (10; 61, 62; 79, 80) mit einer Abgriffsfläche aufweist, deren Verlauf mit der Längsrichtung der Bewegungsübertragungsstange (20, 21) eine gemeinsame Komponente aufweist und an der ein Abgreifer (12, 13; 63, 64; 81, 82) angreift, wobei der Kurvenkörper einerseits und der Abgreifer andererseits starr an der Antriebswelle (6) oder einer antriebsmäßig mit ihr verbundenen Welle (78) sitzen bzw. kinematisch mit der Bewegungsübertragungsstange verbunden sind.

6. Antriebsvorrichtung nach Anspruch 5, dadurch gekennzeichnet, daß der Kurvenkörper eine auf der Antriebswelle (6) sitzende Kurventrommel (10) ist und die Antriebswelle (6) parallel bis zu einem maximalen Abweichungswinkel von 45° zur Bewegungsübertragungsstange bzw. zu den Bewegungsübertragungsstangen (20, 21) verläuft.

7. Antriebsvorrichtung nach Anspruch 6, dadurch gekennzeichnet, daß zwei mit einer Steuerkurveneinheit (10, 12, 13) verbundene Lagerpunkte (18, 19) jeweils über eine eigene Bewegungsübertragungsstange (20, 21) an einem von zwei Freiläufen (32) angreifen und am Kurvenkörper (10) zwei hinsichtlich dieser Antriebswelle gegenüberliegende Abgreifer (12, 13) angreifen, die jeweils mit einer der Bewegungsübertragungsstangen (20, 21) gekoppelt sind.

8. Antriebsvorrichtung nach Anspruch 5, dadurch gekennzeichnet, daß der Kurvenkörper wenigstens eine Kurvenscheibe (79, 80) ist, die auf einer parallel zur Antriebsachse (2) des Fahrzeugs verlaufenden Arbeitswelle (78) sitzt.

9. Antriebsvorrichtung nach einem der Ansprüche 5 bis 8, dadurch gekennzeichnet, daß zwischen dem Abgreifer (12, 13) und dem Lagerpunkt (18, 19) ein zweiarmiger Hebel (14, 15) eingeschaltet ist.

10. Antriebsvorrichtung nach einem der Ansprüche 1 bis 4, dadurch gekennzeichnet, daß der Lagerpunkt (94, 95) an einem Ende eines L-förmigen Hebels (87) sitzt, der im Bereich seines Scheitels gelagert ist und dessen anderes Ende mit einem parallel zur Lagerachse des Hebels verlaufenden Langloch versehen ist, in das ein durch den Antriebsmotor (4) in eine hin- und hergehende Querbewegung versetzter Mitnehmer (91) eingreift, der exzentrisch achsparallel an einem rotierenden Antriebsbauteil sitzt.

11. Antriebsvorrichtung nach einem der Ansprüche 1 bis 4, dadurch gekennzeichnet, daß sie Bestandteil eines solchen Arbeitsfahrzeugs ist, welches ein quer zur Fahrtrichtung angeordnetes, durch den Antriebsmotor (4) in eine hin- und hergehende Querbewegung versetztes Werkzeug (3) trägt, und daß mit dem Werkzeug (3) ein in eine hin- und hergehende Querbewegung versetztes Bauteil (15) bewegungsstarr verbunden ist, wobei der Lagerpunkt (18, 19) an einem Ende eines L-förmigen Hebels (11) sitzt, der im Bereich seines Scheitels gelagert ist und dessen anderes Ende mit dem hin- und hergehenden Bauteil (15) gelenkig verbunden ist.

12. Antriebsvorrichtung nach Anspruch 10 oder 11, gekennzeichnet durch zwei miteinander fest verbundene L-förmige Hebel (87) in Form eines T, an dessen Querbalkenenden je eine eigene Bewegungsübertragungsstange (20, 21) angreift.

13. Antriebsvorrichtung nach Anspruch 9 oder einem der auf Anspruch 3 rückbezogenen Ansprüche 5 bis 12, dadurch gekennzeichnet, daß an einem oder mehreren der Hebel (14, 15; 31) eine Verstelleinrichtung (30, 34; 18, 35) zur Beeinflussung des Drehwinkels der Antriebsachse (2) durch die Wahl der Hebellänge angeordnet ist.

## Claims

1. Drive unit for a working vehicle, comprising: a driving engine (4), a transverse driving axis (2), a driven working tool (03) and a driving shaft (6) extending in the longitudinal direction of the vehicle, driven by the driving engine and serving the purpose of transmitting the drive power to the driving axis and to the working tool, characterized in that a motion transmission bar (20, 21) which is longitudinally movable, is strained on tension and/or pressure and, via a free-wheel (32, 36), acts upon the driving axis (2), is mounted on at least one engagement point (18, 19) which is located at a distance from the driving axis (2) and which is caused to oscillate forwardly and backwardly by the driving shaft (6, 78) via a kinematic linkage.

2. Drive unit as claimed in claim 1, characterized in that at least two free-wheels (32, 36) acting in opposite directions are arranged at the driving axis (2), one or none of the free-wheels being activatable by way of a locking device (37) for transmitting the motion transmitted by the motion transmission bar (20, 21) to the driving axis (2).

3. Drive unit as claimed in claim 1 or 2, characterized in that the motion transmission bar(s) (20, 21) engage(s) the respective free-wheel (32, 36) via a respective lever (31) arranged rockably around the driving axis (2).

4. Drive unit as claimed in any of claims 1 to 3, characterized in that the driving shaft (6) driving the tool (3) is divided by a clutch element (25).

5. Drive unit as claimed in any of claims 1 to 4, characterized in that the engagement point (18, 19) is attached kinematically to a cam unit (10, 12, 13; 61-64; 79-82) which has a rotatable cam body (10; 61, 62; 79, 80) with a cam face whose course has a common component with the longitudinal direction of the motion transmission bar (20, 21) and at which a follower (12, 13; 63, 64; 81, 82) taps, the cam body on the one hand and the follower on the other hand being fitted rigidly to the driving shaft (6) or to a shaft (78) drivingly connected with the driving shaft, or being connected kinematically with the motion transmission bar, respectively.

6. Drive unit as claimed in claim 5, characterized in that the cam body is a cam drum (10) arranged on the driving shaft (6) and that the driving shaft (6) extends in parallel to the motion transmission bar(s) (20, 21) up to a maximum deviation angle of 45°.

7. Drive unit as claimed in claim 6, characterized in that two engagement points (18, 19) connected with one cam unit (10, 12, 13) each engage, each via a motion transmission bar (20, 21) of its own, one of two free-wheels (32), and that two followers (12, 13) engage the cam body (10), which followers, with regard to this driving shaft, lie opposite to each other and are each coupled with one of the motion transmission bars (20, 21).

8. Drive unit as claimed in claim 5, characterized in that the cam body is at least one cam disc (79, 80) which is mounted on a power shaft (78) extending parallelly to the drive axis (2) of the vehicle.

9. Drive unit as claimed in any of claims 5 to 8, characterized in that a two-arm lever (14, 15) is arranged between the follower (12, 13) and the engagement point (18, 19).

10. Drive unit as claimed in any of claims 1 to 4, characterized in that the engagement point (94, 95) is situated at one end of an L-shaped lever (87) which is pivoted in the area of its vertex and whose other end is provided with an elongated hole extending parallelly to the bearing axis of the lever, a driver (91) caused by the driving engine (4) to move transversely to and fro and arranged eccentrically and parallelly to the axis on a rotating driving component engaging the enlongated hole.

11. Drive unit as in any of claims 1 to 4, characterized in that it is a component of a working vehicle of the kind carrying such a tool (3) which is arranged transversely to the driving direction of the vehicle and which is caused by the driving engine (4) to move transversely to and fro, and that an element (15) which is caused to move transversly to and fro is rigidly connected with the tool (3), the engagement point (18, 19) being situated at one end of an L-shaped lever (11) which is pivoted in the area of its vertex and the other end of which is linked to the element (15) which is moving to and fro.

12. Drive unit as claimed in claim 10 or 11, characterized by two firmly connected L-shaped levers (87) formed in the shape of a T, the ends of the transverse beam of which each engage a motion transmission bar (20, 21).

13. Drive unit as claimed in claim 9 or in any of claims 5 to 12 if referred to claim 3, characterized in that at one or more of the levers (14, 15; 31) an adjustment device (30, 34; 18, 35) for influencing the rotation angle of the drive axis (2) by chosing the length of the lever is arranged.

## Revendications

1. Dispositif d'entraînement pour un véhicule utilitaire, comprenant un moteur (4), un essieu moteur (2), transversal, un outil entraîné (3) ainsi qu'un axe longitudinal d'entraînement (6) entraîné par le moteur et servant à transmettre l'entraînement à l'essieu moteur et à l'outil, caractérisé en ce qu'une barre de transmission de mouvement (20, 21) mobile longitudinalement, sollicitée en traction et/ou en compression, est montée sur au moins un point de palier (18, 19) prévu à distance de l'essieu moteur (2), et qui est mis en mouvement oscillatoire vers l'avant et vers l'arrière par une chaîne cinématique à partir de l'axe d'entraînement (6, 78), cette barre de transmission agissant sur l'essieu moteur par l'intermédiaire d'une roue libre (32, 36).

2. Dispositif d'entraînement selon la revendication 1, caractérisé en ce qu'au moins deux roues libres (32, 36) agissant en sens opposés sont prévues sur l'essieu moteur (2), roues libres dont l'une ou aucune n'est activée par un dispositif d'encliquetage (37) pour transmettre à l'essieu moteur (2) le mouvement de la barre de transmission (20, 21).

3. Dispositif d'entraînement selon la revendication 1 ou 2, caractérisé en ce que la ou les barres de transmission de mouvement (20, 21) agissent sur la roue libre respective (32, 36) par l'intermédiaire d'un levier (31) respectif monté pivotant autour de l'essieu moteur (2).

4. Dispositif d'entraînement selon l'une des revendications 1 à 3, caractérisé en ce que l'essieu moteur (6) qui entraîne l'outil (3) est coupé par un élément d'accouplement (25).

5. Dispositif d'entraînement selon l'une des revendications 1 à 4, caractérisé en ce que le point de palier (18, 19) est relié cinématiquement à une unité à courbe de commande (10, 12, 13 ; 61-64 ; 79-82) qui comporte un organe rotatif de courbe (10; 61, 62; 79, 80) avec une surface d'attaque dont le tracé présente une composante commune avec la direction longitudinale de la barre de transmission de mouvement (20, 21), et sur laquelle agit un organe de détection (12, 13 ; 63, 64 ; 81, 82), et, d'une part, l'organe de courbe, et, d'autre part, le détecteur sont portés rigidement par l'axe d'entraînement (6) ou par un axe (78) coopérant avec celui-ci dans le sens de l'entraînement, ou sont reliés cinématiquement à la barre de transmission de mouvement.

6. Dispositif d'entraînement selon la revendication 5, caractérisé en ce que l'organe de courbe est un tambour courbe (10) monté sur l'axe d'entraînement (6), et cet axe d'entraînement (6) est parallèle à la barre de transmission ou aux barres de transmission (20, 21) jusqu'à un angle de déviation maximum de 45°.

7. Dispositif d'entraînement selon la revendication 6, caractérisé en ce que deux points de palier (18, 19) reliés chaque fois à une unité de commande à courbe (10, 12, 13) agissent chaque fois, par une barre de transmission de mouvement (20, 21) propre, sur l'une des deux roues libres (32), et deux organes de détection (12, 13) opposés par rapport à l'axe d'entraînement agissent sur l'organe à courbe (10), ces détecteurs étant chaque fois couplés à l'une des barres de transmission de mouvement (20, 21).

8. Dispositif d'entraînement selon la revendication 5, caractérisé en ce que l'organe à courbe est au moins un disque courbe (79, 80) monté sur un axe d'entraînement (78) parallèle à l'axe d'entraînement (2) du véhicule.

9. Dispositif d'entraînement selon l'une des revendications 5 à 8, caractérisé par un levier à deux bras (14, 15) entre le détecteur (12, 13) et le point de palier (18, 19).

10. Dispositif d'entraînement selon l'une des revendications 1 à 4, caractérisé en ce que le point de palier (94, 95) est prévu à une extrémité d'un levier (87) en forme de L monté au niveau de son sommet et dont l'autre extrémité est munie d'un trou oblong parallèle à l'axe de palier du levier, dans lequel vient prendre un organe d'entraînement (91) mis en mouvement transversal alternatif par le moteur (4), cet organe d'entraînement étant excentré, parallèle à l'axe d'une pièce motrice rotative.

11. Dispositif d'entraînement selon l'une des revendications 1 à 4, caractérisé en ce qu'il fait partie d'un véhicule utilitaire qui porte un outil (3) mis en mouvement alternatif transversal par rapport à la direction de circulation du véhicule, par le moteur (4), et en ce qu'une pièce (15) est reliée rigidement en mouvement à l'outil (3), cette pièce étant mise en mouvement transversal alternatif, et le point de palier (18, 19) est porté par une extrémité d'un levier (11) en forme de L monté au niveau de son sommet et dont l'autre extrémité est reliée de manière articulée à la pièce (15) effectuant un mouvement alternatif.

12. Dispositif d'entraînement selon la revendication 10 ou 11, caractérisé par deux leviers en L (87) reliés rigidement suivant une forme de T et dont les extrémités de la branche transversale sont soumises à l'action d'une barre de transmission de mouvement (20, 21) propre.

13. Dispositif d'entraînement selon la revendication 9 ou l'une des revendications 5 à 12 reliée à la revendication 3, caractérisé en ce que sur un ou plusieurs des leviers (14, 15 ; 31) il est prévu une installation de réglage (30, 34 ; 18, 35) pour influencer l'angle de rotation de l'essieu moteur (2) par le choix de la longueur du levier.
